# FASCICULE DE BREVET EUROPEEN

(11) **EP 1 884 283 B1**
(45) Date de publication et mention de la délivrance du brevet: **24.04.2013**
(21) Numéro de dépôt: 07111975.4
(22) Date de dépôt: 06.07.2007
(51) Int. Cl.: B01J 20/281, G01N 31/22, G01N 21/77

(54) **Procédé de dosage de cations AL3+ ou FE3+ en milieu aqueux**
Verfahren zur Bestimmung von Al3+- oder Fe3+ Kationen in wässrigem Medium
Method of determining AL3+ or FE3+ cations in an aqueous medium

(30) Priorité: 28.07.2006 FR 0606938
(43) Date de publication de la demande: 06.02.2008
(73) Titulaire: Société des Eaux de Marseille, 13006 Marseille (FR)
(72) Inventeur: Boudenne, Jean-Luc, 13009, Marseille (FR); Brach-Papa, Christophe, 84120, Pertuis (FR); Coulomb, Bruno, 13320 Bouc bel air (FR); Lieutaud, Gérard, 13008, Marseille (FR); Vanloot, Pierre, 13002, MARSEILLE (FR)
(74) Mandataire: Domange, Maxime

(56) Documents cités:
- C. BRACH-PAPA ET AL.: "Fluorimetric determination of aluminium in water by sequential injection through column extraction" ANALYTICAL AND BIOANALYTICAL CHEMISTRY, vol. 378, 2004, pages 1652-1658, XP002428625
- S. BOUSSETTA ET AL.: "Comparative study on metal extraction properties of Empore SDB-XC and Amberlite XAD-4 grafted by salicylic acid and its derivatives via different bridges" SEPARATION SCIENCE AND TECHNOLOGY, vol. 41, 5 juin 2006 (2006-06-05), pages 1619-1633, XP009081932
- J.-L. BOUDENNE ET AL: "Modification of poly(styrene-co-divinylbenzene) resin by grafting on an aluminium selective ligand" POLYMER INTERNATIONAL, vol. 51, 2002, pages 1050-1057, XP002428624
- DATABASE CA CHEMICAL ABSTRACTS SERVICE, COLUMBUS, OHIO, US; 1998, QU, XIANGJIN; ZHOU, JIE; SUN, YANHUA; ZHANG, CHANGJUN: "Simultaneous determination of iron and aluminum with flow injection-standard addition dual wavelength spectrophotometry" XP002459660
- SUMI Y ET AL: "THE CHOICE OF A MASKING AGENT IN THE HISTOCHEMICAL STAINING OF METALS" HISTOCHEMICAL JOURNAL, vol. 15, no. 3, 1983, pages 231-238, XP009092535 ISSN: 0018-2214
- CLOSE E A ET AL: "A FIELD METHOD FOR EXCHANGEABLE 1 M POTASSIUM CHLORIDE EXTRACTABLE ALUMINUM-III IN SOILS" AUSTRALIAN JOURNAL OF SOIL RESEARCH, vol. 27, no. 4, 1989, pages 681-684, XP009092534 ISSN: 0004-9573
- WILLIS R R: "Automatic colorimetric determination of acid soluble aluminium in plain carbon steels" METALLURGIA; METALLURGIA NOV 1968, vol. 78, no. 469, novembre 1968 (1968-11), pages 213-216, XP001537661
- DESAI M N ET AL: "Resorcyclic acids as indicators for the direct CyDTA titration of ferric ions" LAB.PRACT. 1974, vol. 23, no. 2, 1974, pages 50-52, XP009092531

## Description

La présente invention concerne un procédé et un dispositif de dosage de cations Al³⁺ et/ou Fe³⁺ dans un milieux aqueux, notamment pour l'analyse automatique sur site de la concentration en floculant résiduel à base de sels d'aluminium ou de fer dans des échantillons liquides aqueux.

La présente invention concerne plus particulièrement l'analyse, le contrôle et le suivi des eaux destinées à la consommation humaine, traitées par des floculants à base de sels d'aluminium ou de fer.

La présente invention concerne également un support solide utile pour extraire en phase solide les dits cations Al³⁺ ou Fe³⁺ et un procédé de préparation dudit support solide.

Les réglementations françaises et européennes imposent aux producteurs et distributeurs d'eau des seuils de concentrations admissibles dans les eaux distribuées de plus en plus bas pour de nombreux composés, dont un grand nombre d'éléments traces métalliques (décret du 20 décembre 2001, pris en application de la Directive Européenne 2000/60/CE), et mettent en avant le principe d'autosurveillance de la qualité des eaux. Ce concept d'autosurveillance a obligé les industriels et acteurs de l'eau à développer et installer de nouveaux outils analytiques entièrement automatisés, permettant de quantifier certains paramètres de qualité et de déclencher une alerte en cas de dépassement d'une valeur seuil. D'autre part, les producteurs d'eau doivent également s'assurer qu'aucun composé utilisé dans le cadre du traitement de l'eau ne se retrouve dans l'eau distribuée, afin d'éviter tout changement des caractéristiques organoleptiques ou d'entraîner une toxicité de l'eau au robinet du consommateur.

Dans le cadre du traitement des eaux, les sels d'aluminium et de fer (AlCl₃ et FeCl₃ notamment) sont largement utilisés dans de nombreux pays comme agents coagulants/floculants dans les usines de potabilisation des eaux. Ils permettent la déstabilisation électronique des particules colloïdales, leur agglomération et ainsi de faciliter la décantation lors du traitement primaire des eaux brutes. Actuellement, étant donné le caractère toxique avéré de l'aluminium, les sels d'aluminium tendent à être remplacés par les sels de fer dans les usines de potabilisation, entraînant ainsi, non plus des problèmes de santé publique, mais des changements des paramètres organoleptiques de l'eau.

Le taux maximum autorisé pour Al³⁺ est de 200 µg/l et sera peut être bientôt de 100 µg/l.

Le contrôle de la teneur de ces cations métalliques dans les eaux distribuées aux consommateurs est impératif à plusieurs titres :
- pour la santé du consommateur : de nombreuses études épidémiologiques ont montré le rôle potentiel de l'aluminium dans le déclenchement de la maladie d'Alzheimer. Au nom du Principe de Précaution, il est donc important de s'assurer de la faible teneur résiduelle d'aluminium dans les eaux distribuées ; de plus, le fer fait partie des substances chimiques qui modifient les qualités organoleptiques de l'eau (coloration, saveur).
- pour l'industriel : l'aluminium et le fer sont des indicateurs du bon fonctionnement et du bon entretien des installations de production, de traitement et de distribution d'eaux potables. Un suivi de ces teneurs au cours du traitement de l'eau permettrait un meilleur contrôle du « process » et permettrait d'ajuster plus finement les quantités de floculants utilisés.

Le contrôle régulier de la teneur des traces métalliques dans les eaux, imposé par la Directive Européenne, nécessite l'emploi de procédures analytiques permettant d'obtenir des résultats fiables et représentatifs du milieu, ce qui, par conséquent, sous-entend une multiplication des mesures. Or, les procédures analytiques de référence classiquement employées ne permettent pas d'effectuer des contrôles sur site, ni, à fortiori, en continu, et imposent une analyse en laboratoire (avec la mise en oeuvre d'étapes telles que l'échantillonnage, le stockage, le pré-traitement éventuel, ...). Même si le contrôle régulier de la qualité des eaux est envisageable en multipliant les échantillonnages, les risques d'erreur sur le résultat analytique demeurent, et surtout, le coût analytique s'accroît proportionnellement.

De plus, ces méthodes classiques ne permettent pas la mise en place de systèmes d'alertes, permettant de réagir rapidement en cas de modification de la qualité des eaux traitées et/ou distribuées.

Ainsi, la présente invention a pour objectif de répondre aux attentes des producteurs d'eaux potables avec la mise au point d'un système d'analyse automatisé des taux de cations métalliques permettant une mesure in situ et en continu avec des coûts d'analyse réduits.

Actuellement, les méthodes de contrôle des doses de floculants sont essentiellement empiriques (« JAR TEST ») et les eaux traitées sont analysées en laboratoire, ce qui induit un délai de réponse de la chaîne analytique relativement long et ne permet pas une prise de décision rapide en cas de dysfonctionnement des filières de traitement de l'eau, ou en cas de modification rapide de la qualité de l'eau brute.

Les méthodes d'analyse pour mesurer les concentrations de floculants résiduels dans l'eau traitée ne sont pas appliquées à l'analyse en flux sur site. En effet, ces méthodes sont de type potentiométrique adaptables à des mesures en ligne mais sujets à de nombreux interférents, ou de type colorimétrique adaptables à la mesure en flux sur site, mais présentant des limites de détection souvent au-delà des valeurs seuils réglementaires et de très nombreuses interférences liées à la présence d'autres cations ou anions.

Afin de réduire les interférences et de diminuer les limites de détection des méthodes classiques de dosages de l'aluminium et du fer décrites ci-dessus, la présente invention propose de réaliser une extraction sélective en phase solide des cations Al³⁺ et Fe³⁺. Il s'agit de retenir spécifiquement l'analyte d'intérêt (cations Al³⁺ ou Fe³⁺) sur un support solide par percolation de l'échantillon à travers un support solide constitué d'une résine adaptée, puis d'éluer l'analyte retenu par le support solide à l'aide d'un solvant ou acide (éluant), l'éluât faisant alors l'objet d'une analyse pour quantification spécifique de l'analyte Al 3+ ou Fe3+ en aval.

L'extraction en phase solide (SPE) a déjà été appliquée dans des dispositifs pour la préparation automatique d'échantillons, mais en vue de l'analyse de composés organiques.

L'extraction en phase solide des éléments métalliques a été décrite dans de nombreux brevets internationaux (US patents 5 071 565 ; 6 475 340 ; 6 770 246 par exemple). Cependant, aucune résine permettant une extraction sélective de cations Al³⁺ et Fe³⁺ et permettant un dosage précis et de grande sensibilité n'a été décrite.

D'autre part, dans ces brevets, les résines ou membranes utilisées pour l'extraction sont fabriquées soit par polymérisation (US patent 5,738,791 par exemple), soit par imprégnation de polymères avec des agents complexant divers, ce qui peut diminuer la durée de vie du matériau d'extraction et augmenter la consommation de réactifs nécessaires à l'analyse.

Un mode de fonctionnalisation ou de modification d'une résine à base de poly(styrène-divinylbenzène) a déjà été décrit dans le brevet US 5 071 565 comprenant la fonctionnalisation de la résine par des groupements hydroxyméthyl, acétyle et cyanoméhtyl, l'application de cette résine étant l'extraction de composés organiques des échantillons, et notamment des phénols.

Dans l'article de J.L BOUDENNE et al de la revue Polymer International, volume 51 de 2002, pages 1050-1057, on a décrit un procédé de fabrication de support solide correspondant au support solide de formule I ci-après. Mais, cet article ne précise aucune condition opératoire, notamment condition de pH, pour utiliser valablement cette résine dans le cadre d'un dosage sélectif des ions Al³⁺ et Fe³⁺. D'autre part, dans cet article, les extractions sur support solide sont réalisées en mode statique par mise en contact de l'échantillon, pendant un certain temps, avec le support solide, et non pas par extraction en flux.

L'article de BRACH-PAPA et al. dans la revue Analytical and Bioanalytical Chemistry, volume 378 de 2004, pages 1652-1658, décrit l'utilisation de résine de formule I ci-après, sous forme de particules solides, pour l'extraction uniquement de l'aluminium Al³⁺. Les conditions de pH décrites pour réaliser l'extraction, à savoir à pH 3,5, ne sont pas suffisamment sélectives par rapport aux autres métaux (cuivre, zinc et fer), d'une part, et, d'autre part, les conditions de détection par fluorométrie, à l'aide du complexe HQS, ne peuvent pas s'appliquer au cation Fe³⁺.

Le but de la présente invention est de fournir des procédé et dispositif améliorés pour permettre l'analyse sur site de traces métalliques d'aluminium ou de fer, notamment issus des coagulants/floculants utilisés dans le traitement des eaux destinées à la consommation humaine, avec précision et sensibilité.

Un autre but est de fournir des procédé et dispositif d'analyse permettant une analyse automatisé in situ avec des coûts réduits.

Un autre but de la présente invention est de fournir un procédé de dosage par analyse in situ en flux, avec une installation applicable, aussi bien au dosage des cations Al³⁺, que dosage des cations Fe³⁺, moyennant des adaptations des conditions opératoires et, surtout, avec des conditions de détection applicables plus facilement en milieu industriel, c'est-à-dire plus simples et plus faciles à mettre en oeuvre que la fluorométrie, et applicables aussi bien à une détection spécifique de cations Al³⁺ que Fe³⁺.

La présente invention consiste à réaliser une extraction/pré concentration sélective en phase solide sur colonne remplie de particules solides, de l'aluminium et du fer, puis l'élution de ces éléments à l'aide d'un acide approprié, puis le mélange de cet éluât avec un réactif complexant formulé pour permettre une détection spectrophotométrique des complexes métalliques spécifiquement de Al³⁺ ou Fe³⁺ formés.

Pour ce faire, la présente invention fournit un procédé de dosage de cations Al³⁺ et/ou Fe³⁺ en milieu aqueux, caractérisé en ce qu'on réalise une analyse en flux comprenant les étapes successives suivantes dans lesquelles :
1) on prélève un échantillon de dit milieu aqueux de volume déterminé, et
2) on ajuste le pH de l'échantillon à une valeur de pH de 2 à 2,5, et
3) on fait passer par percolation la totalité de l'échantillon ainsi prétraité à travers une colonne contenant des particules solides, de préférence sous forme de billes, de résine comprenant un polymère du poly(styrène-divinylbenzène) réticulé (1), ledit polymère au moins en surface des dites particules, comprenant un radical d'acide salicylique (3) greffé sur des cycles benzéniques par l'intermédiaire d'un pont cétone (2) de formule générale schématique I suivante :

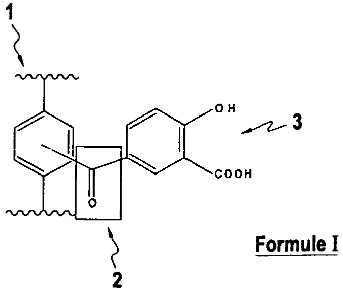

Dans laquelle
- (1) représente le polymère réticulé,
- (2) représente le pont cétone,
- (3) représente le radical d'acide salicylique, et

4) on réalise une élution à travers la colonne avec une solution pH de 0.1 à 1, et
5) on mélange l'éluât avec une composition de détection comprenant un agent complexant de détection complexant les cations Al³⁺ et Fe³⁺ sous forme de complexe détectable par spectrophotométrie d'absorption qui est le Chromazurol S dans des conditions de pH de 2 à 5 permettant la complexation préférentielle de l'un des cations Al³⁺ ou Fe³⁺ que l'on veut doser par rapport à l'autre cation, à savoir pH de 2 à 3 pour le dosage des cations Fe (III) et pH de 4 à 5 pour le dosage des cations Al(III), et
6) on dose les cations Al³⁺ ou Fe³⁺ en quantifiant les complexes d'Al³⁺ ou respectivement de Fe³⁺ formés par mesure de spectrophotométrie en présence d'un agent tensioactif cationique augmentant l'absorptivité du complexe métallique formé.

Il a été démontré selon la présente invention que les conditions d'extraction, d'élution et détection ci-dessus sont suffisamment sélectives, sensibles et fiables pour détecter des traces de cations Fe³⁺ et Al³⁺ inférieures à 10 µg.

D'autre part, ces conditions de sélectivité telles que rapportées au tableau 5 de la présente demande de brevet s'avèrent supérieures à celles rapportées dans la technique antérieure.

Le choix du chromazurol comme ligand de détection a été obtenu après avoir testé de nombreux ligands qui ne permettaient pas une détection suffisamment sensible ou sélective pour détecter des traces de cations inférieures à 200 µg/l et plus particulièrement inférieures à 10 µg/l de cations Fe³⁺ et Al³⁺.

Beaucoup de ces ligands ont été éliminés à cause de compexation trop faible, manque de sensibilité, manque de sélectivité (interférences), formation de complexes mixtes et/ou cinétique de réaction trop lente.

Le Chromazurol S (CAS) est donc nettement le plus adapté à la gamme de concentrations d'aluminium ou de fer rencontrées en station de traitement, et c'est aussi le plus sensible. Mais, comme ces caractéristiques n'étaient pas encore suffisantes, le CAS a été mélangé à un détergent (tensioactif) pour améliorer encore la limite de détection et la sensibilité.

Les valeurs caractéristiques du réactif Chromazurol S (CAS) avec détergent sont :
- gamme : 0-400 µg/l pour le fer et l'aluminium,
- limite de détection : 1,1 et 1,2 µg/l pour l'aluminium et le fer respectivement,
- sensibilité : 0,2 µg/l pour l'aluminium et le fer.

Un procédé de préparation d'un support solide modifié de formule I selon l'invention comprend les étapes successives suivantes dans lesquelles :
1) on fixe un radical acétyle (-COCH₃) sur les cycles benzéniques du dit polymère par une réaction d'acylation de Friedel et Crafts, et
2) on réalise une oxydation du dit radical acétyle en radical d'acide carboxylique que l'on transforme en radical de chlorure d'acide (-COCl), et
3) on transforme le radical de chlorure d'acide en un radical 2-méthylanisole par une réaction de Friedel et Crafts, et
4) On réalise l'oxydation du groupe méthyle (-CH3) du radical 2-méthylanisole en groupe carboxylique et
5) On hydrolyse le groupe méthoxy (-OCH₃) du radical 2-méthylanisole en groupe hydroxyle.

De façon connue les particules solides résultent de la réticulation en réseau tridimensionnel du dit polymère.

Le support solide de ce polymère modifié selon la formule I présente l'avantage de cumuler le propriétés suivantes lui permettant l'extraction sélective des cations Al³⁺ et Fe³⁺ qui seront explicitées plus loin, à savoir :
- complexation sélective des cations Al³⁺ et Fe³⁺, puis décomplexation dans des conditions de pH acide qui ne dégradent pas le polymère, et
- possibilité de réutilisation du polymère après lavage à l'acide, et
- importante capacité de rétention des cations Al³⁺ et Fe³⁺.

L'acide salicylique semble jouer le rôle d'un agent complexant, ou ligand sélectif des analytes d'intérêt, dans certaines conditions de mise en oeuvre de l'échantillon aqueux à analyser et reste durablement fixé au support d'extraction à base de poly(styrène-divinylbenzène) dans les conditions de complexation et décomplexation.

A l'étape 3), le support solide retient sélectivement les cations Al³⁺ et Fe³⁺, ce qui permet à l'étape 4) de ne récupérer que ces 2 éléments métalliques et ainsi d'éviter les interférences de détection des traces d'autres éléments métalliques, notamment du Cuivre lors de l'étape de détection par mesure spectrale.

A l'étape 2), ces valeurs de pH correspondent aux valeurs pour lesquelles la rétention subséquente des analytes d'intérêt Al³⁺ ou Fe³⁺ est maximum et celles des autres cations métalliques est minimum. De préférence, pour réaliser le dosage spécifique de cations Al³⁺ et donc la rétention maximum de cations Al³⁺ à l'étape 2), on ajuste le pH à une valeur de 2,5. Et, pour réaliser le dosage de cations Fe³⁺, on ajuste le pH à une valeur de préférence égale à 2.

A l'étape 4), l'éluant acide permet de décrocher ou relarguer les cations Al³⁺ et Fe³⁺ du support solide.

Avantageusement, on dose successivement les deux cations Fe³⁺ et Al³⁺.

Ce type de dosage convient en particulier pour doser les dits éléments métalliques à une concentration inférieure à 1 mg/L.

A l'étape 1), le volume de l'échantillon ne doit pas dépasser le volume de rupture de la colonne, c'est à dire le volume au-delà duquel la colonne est saturée en cations séquestrés compte tenu de la concentration en cations de l'échantillon et de la quantité de support solide dans la colonne.

A l'étape 5), lesdits réactifs permettant la complexation préférentielle d'un des 2 cations Al³⁺ ou Fe³⁺ comprennent des réactifs qui empêche la complexation de l'autre des 2 cations Al³⁺ ou Fe³⁺ avec le dit agent complexant de détection. Ceci permet à l'étape 6) de doser avec plus de précision et sensibilité spécifiquement le premier cation sans interférence avec l'autre cation, car autrement les spectres d'absorption de Al.³⁺ et Fe³⁺ sont difficiles à séparer.

Avantageusement encore, à l'étape 2), on met en oeuvre une solution d'acide nitrique. Cet acide a un effet oxydant vis à vis de Al³⁺ et Fe³⁺ ce qui permet aussi de maintenir les cations Al³⁺ et Fe³⁺ sous forme libre non complexée et pour Fe³⁺ dans son degré d'oxydation +3.

Avantageusement, à l'étape 3), on envoie un volume donné d'eau distillé dans la colonne après le dit volume d'échantillon prétraité pour pousser le dit échantillon dans la colonne et s'assurer que la totalité de l'échantillon a bien traversé la colonne. Ceci permet aussi d'éviter de produire un décrochage des cations Al³⁺ et Fe³⁺ du support solide en envoyant la solution de percolation acide de l'étape 4) avant que tous les cations présents n'aient été retenus sur le support solide.

Plus particulièrement, pour doser des concentrations de 0 à 400 µg/l de cations Al³⁺ et/ou Fe³⁺, on met en oeuvre des quantités de support solide correspondant à au moins 5 mg/(ml d'échantillon), de préférence au moins 8mg/(ml d'échantillon), plus particulièrement de 5 à 10 mg/(ml d'échantillon). Il s'agit ici du volume d'échantillon prélevé à l'étape 1.

De préférence, à l'étape 4), pour une élution optimale, on met en oeuvre une solution à pH de 0,1 à 0,35 pour le dosage des cations Fe²⁺ et pH de 0,5 à 1 pour le dosage des cations Al³⁺, de préférence encore une solution d'acide chlorhydrique. D'autres acides ont été testés mais cet acide HCl assure la meilleure élution de ces cations.

De préférence, à l'étape 4), on met en oeuvre un volume de solution d'élution d'acide inférieur au volume de l'échantillon initial pour concentrer la solution en analyte par rapport audit échantillon initialement prélevé. Ceci permet d'augmenter la sensibilité du dosage ultérieur de l'étape 5).

Plus particulièrement encore, pour assurer une bonne rétention des cations Al³⁺ et Fe³⁺ sur le support solide, avec des volumes d'échantillon percolé de 2 à 5ml, la vitesse de percolation de l'échantillon à l'étape 3) doit être de 1,5 à 6 ml/min., de préférence de 2 à 3 ml/min et pour assurer un bon décrochage à l'étape 4), le volume d'acide percolé est de 1/5 à 1/1 et la vitesse de percolation de l'acide est de 1 à 8 ml/min. de préférence de 4 à 6 ml/min.

Plus particulièrement, à l'étape 5) on utilise comme agent complexant de détection du chromazurol S, de préférence en solution à pH de 2 à 5, ce domaine de pH permettant de concilier affinité du ligand pour l'analyte et absorptivité spectrale.

De préférence, pour doser le cations Al³⁺, à l'étape 5) on mélange ledit agent de détection complexant les cations, avec des réactifs transformants le Fe³⁺ en Fe²⁺, à savoir tel que du chlorhydrate d'hydroxylamine et un agent complexant le Fe²⁺ tel que la 1,10-orthophénanthroline. Ce composé forme des complexes non-absorbant (et non fluorescent) avec les cations Fe²⁺ et Cu²⁺, ce qui permet d'éviter toute interférence lors de l'étape de détection 6.

L'ensemble du chlorhydrate d'hydroxylamine et de la 1,10 orthophénanthroline constitue desdits réactifs empêchant la complexation de Fe³⁺ avec le Chromazurol S.

De préférence, pour doser les cations Al³⁺, à l'étape 5) on met en oeuvre le dit chromazurol dans une solution tampon à pH 5, pour assurer une complexation optimale du cation Al³ et la formation d'un complexe d'absorption maximale.

De préférence, pour doser les cations Fe³⁺, à l'étape 5) on met en oeuvre le dit chromazurol dans une solution tampon à pH 3, à ce pH cet agent ne complexe pas ou peu les cations Al³⁺.

Ces solutions tampons rentrent dans la catégorie des réactifs permettant une complexation préférentielle de l'une des 2 cations par ledit agent complexant de détection.

De préférence encore, à l'étape 5) on met en oeuvre l'agent complexant de détection en mélange avec un agent tensioactif cationique, de préférence encore à une concentration supérieure à la CMC (concentration micellaire critique).

Ainsi le complexe de détection s'agglomère en se liant de façon électrostatique à la surface des micelles, ce qui augmente l'intensité du signal détecté et donc la sensibilité et l'absorptivité ou coefficient d'extinction molaire du complexe.

La présente invention fournit également un procédé dans lequel on met en oeuvre un dispositif d'analyse in situ par injection en flux utile pour réaliser un procédé de dosage selon l'invention, comprenant :
- a- un ensemble de burettes ou seringues automatiques et d'électrovannes de commutation pilotables pour l'aspiration et la poussée des échantillons et des réactifs et de l'eau contenus dans les burettes ou seringues,
- b- au moins une micro colonne contenant un support solide selon l'invention
- c- un ensemble de réactifs et de l'eau permettant respectivement l'ajustement du pH de l'échantillon, l'élution des cations Al³⁺ ou Fe³⁺ de la micro colonne et la complexation des cations élués, et
- d- un appareil spectrophotométrique permettant la quantification de l'aluminium et du fer par mesure de l'intensité du signal (absorbance) liée à la présence du complexe formé avec l'aluminium et le fer, et
- e- des tubulures reliant les modules a à d ci-dessus de préférence en téflon, les tubulures pouvant être enroulées ou disposées en serpentin pour former des boucles d'attente ou des boucles de mélanges (ou réacteur onduleux).

D'autres caractéristiques et avantages de la présente invention apparaîtront à la lumière de la description détaillée qui va suivre en référence aux figures 1 à 6.

La figure 1 représente un schéma de dispositif d'analyse à l'aide d'une micro colonne d'extraction comprenant un support solide selon l'invention.

La figure 2 représente des courbes présentant l'effet du pH sur les taux de rétention de différents éléments métalliques (Cu²⁺, Al³⁺, Zn²⁺, Fe³⁺, Ni²⁺ Mg²⁺) sur une colonne d'extraction contenant un support solide constitué à partir de poly(styrène-divinylbenzène) fonctionnalisé selon l'invention.

La figure 3 représente des courbes présentant l'effet du pH sur les taux de rétention de deux éléments métalliques Al³⁺ et Fe³⁺ sur une colonne d'extraction contenant un support solide selon l'invention.

La figure 4 représente de spectres d'absorption UV/visible en fonction des teneurs en Fe³⁺.

La figure 5 représente de spectres d'absorption UV/visible en fonction des teneurs en Al³⁺.

La figure 6 représente une courbe d'étalonnage des teneurs en Al³⁺ et Fe³⁺ dans un procédé de dosage selon l'invention.

Exemple 1 : préparation du support solide à base de poly(styrène-divinylbenzène) modifié :

Le support solide de départ est constitué de billes de 250 à 840 µm de diamètre, d'une résine commerciale à base de résine poly(styrène-divinylbenzène) de référence C.AS 37380-42-0 commercialisé notamment par la société Sigma-Aldrich sous la référence XAD-4.

La résine est tout d'abord fonctionnalisée en surface des billes par fixation d'un groupement acétyle (-COCH₃) sur les cycles benzéniques du polystyrène-divinylbenzène) à l'aide d'une acylation de Friedel-Crafts. Le groupement acétyle introduit à la surface des billes de résine est oxydé en acide carboxylique, puis transformé en chlorure d'acide (-COC1) sous l'action du chlorure de thionyle aboutissant à la formation de RO (schéma ci-après).

Le greffage de l'acide salycilique sur la résine poly(styrène-divinylbenzène) fonctionnalisée nécessite quatre étapes, la résine se trouvant successivement sous quatre états différents (de l'état initial à l'état final) RO à R3 (schéma 2 ci-après). La 2-métylanisole est greffée sur la résine RO par une deuxième réaction de Friedel-Crafts (R1). Le groupement méthyle (-CH₃) de la 2-méthylanisole est oxydé en acide carboxylique (R2). Enfin, au cours de la dernière étape, la fonction méthoxy (-CH₃) est hydrolysée en alcool (R3).

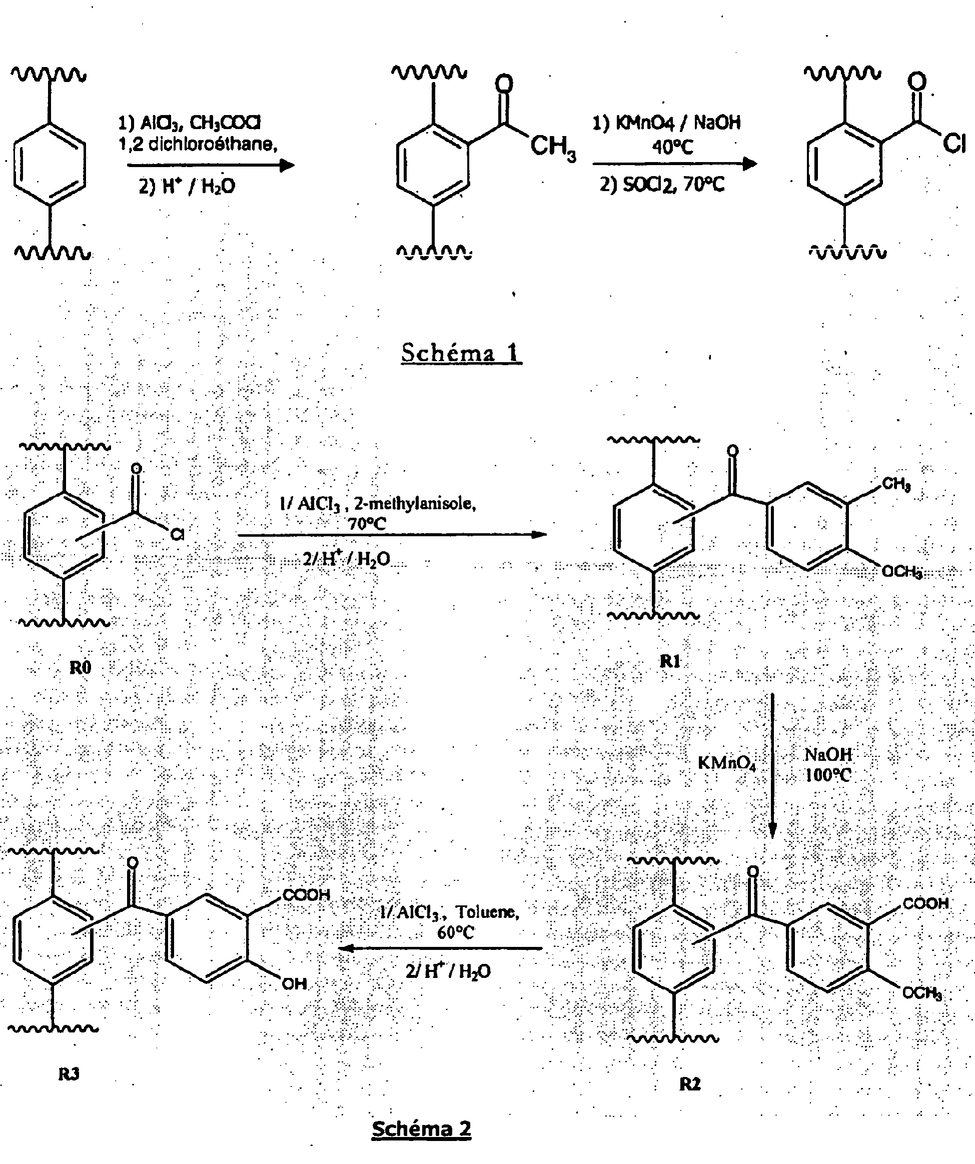

On décrit ci-après les modes opératoires des différentes étapes mises en oeuvre pour la fonctionnalisation du matériau de base ainsi que pour le greffage de l'acide salicylique :

Etape 1 : Introduction d'une fonction chlorure d'acide sur la résine poly(styrène-divinylbenzène) (R0).

Dans un tricol de 100 mL, 5,0 g de billes de résine (préalablement lavées au méthanol et séchées à l'étuve) sont introduits dans une solution contenant 20 mL de 1,2-dichloroéthane et 5,62 g de chlorure d'aluminium (42 mmol). Le mélange est maintenu sous flux d'argon, et 2,7 mL de chlorure d'éthanoyle (42 mmol) sont ensuite ajoutés. Le milieu réactionnel est chauffé à 40°C sous flux d'argon pendant 16 heures. Le mélange réactionnel est hydrolysé par un mélange de glace pilée (300 mL) et d'acide chlorhydrique 2N (300 mL). Après filtration, la résine acylée est abondamment rincée à l'eau distillée, puis au méthanol et séchée à 70°C pendant 12 heures.

2 g de résine acylée sont introduits dans un tricol de 250 mL contenant 5,75g d'hydroxyde de sodium (0,14 mmol) et 100 mL d'eau distillée. Puis à l'aide d'une ampoule à brome 100 mL d'une solution contenant 2,5 g de permanganate de potassium (15 mmol) sont ajoutés goutte à goutte. Le mélange est chauffé à 40°C pendant 1 heure. La résine oxydée est filtrée, puis lavée avec une solution d'acide chlorhydrique (2N) concentrée à chaud (40°C) de manière à éliminer la couche de dioxyde de manganèse formée à sa surface. Le traitement d'oxydation est répété trois fois. La résine oxydée ainsi obtenue, de couleur jaune pâle, est rincée abondamment à l'eau distillée, puis au méthanol et séchée à l'étuve à 70°C pendant 12 heures.

Dans un tri col de 50 mL placé sous balayage d'argon, 2 g de résine oxydée sont introduits dans 30 mL de chlorure de thionyle fraîchement distillé. Le mélange est chauffé à 70°C pendant 2,5 heures avec agitation intermittente. La résine fonctionnalisée est collectée par filtration puis rincée avec du diéthyl éther anhydre avant d'être séchée sous vide.

Etape 2 : Greffage de la 2-méthyanisole sur la résine fonctionnalisée (R1).

Dans un tri col de 50 mL, 3,6 g de chlorure d'aluminium (25 mmol) sont ajoutés à 25 mL de 2-méthylanisole par petites fractions. Le mélange réactionnel est refroidi par un bain de glace et homogénéisé par agitation forte. La résine R0 fonctionnalisée (2g) est ensuite ajoutée. Le mélange réactionnel est chauffé à 60°C pendant 12 heures tout en étant maintenu sous agitation. Il est alors refroidi à température ambiante, puis hydrolysé avec un mélange de glace pilée (300 mL) et HCl 2N (300 mL). La résine greffée est récupérée par filtration, rincée plusieurs fois au méthanol, puis à l'eau distillée. La résine, d'une teinte rouge - orangée, est séchée sous vide.

Etape 3 : Oxydation de la résine greffée (R2).

La résine R1 (2,0 g) est ajoutée à 700 mL d'une solution d'hydroxyde de sodium (0,16 g, 4,0 mmol) chauffée à 60°C dans un tri col de 1L. Le mélange est agité jusqu'à obtenir une dispersion homogène, et 3,76g de permanganate de potassium (24 mmol) sont ajoutés progressivement. Le mélange est chauffé à reflux pendant 4 heures tout en étant placé sous agitation forte. L'excès de permanganate non consommé par la réaction est détruit par ajout de 3 mL d'éthanol. La couche de MnO₂ formée à la surface de la résine est dissoute par 100 mL d'acide chlorhydrique 4N à chaud (40°C). Ce traitement à l'acide est répété 3 fois, puis la résine est rincée abondamment à l'eau distillée et au méthanol. La résine de couleur jaune - orangée, est séchée sous vide, puis conservée dans un dessiccateur avant son utilisation pour la prochaine étape.

Etape 4 : Déprotection de la fonction phénol de la résine greffée oxydée (R3).

Dans un tri col de 100 mL, 5,76 g de chlorure d'aluminium anhydre (40 mmol) sont introduits dans 30 mL de toluène refroidis par un bain de glace. Une fois le mélange homogénéisé par agitation, 1,92g de R2 (1,9 mmol) sont ajoutés. Le mélange réactionnel est ensuite chauffé à 60°C pendant 8 heures. Comme pour la synthèse du produit P3, les émanations d'acide chlorhydrique sont éliminées par un balayage d'argon. La réaction est stoppée en plongeant le mélange réactionnel dans un mélange de glace pilée (300 mL) et d'acide chlorhydrique 2N (300 mL). La résine finale, de couleur beige, est récupérée par filtration, lavée à l'eau distillée et au méthanol plusieurs fois avant d'être séchée sous vide.

La résine poly(styrène-divinylbenzène) est lavée plusieurs fois au méthanol avant son utilisation selon la procédure décrite ci dessous :

5g de résine sèche sont introduits dans un erlen meyer de 150 mL contenant 100 mL de méthanol. Le mélange méthanol/résine est placé sous agitation pendant 24h. Après rinçage, la résine est collectée par filtration, et rincée une nouvelle fois avec quelques mL de méthanol avant d'être séchée à 60°C pendant 48 heures. Le matériau sec est conservé dans un dessiccateur jusqu'à son utilisation.

Les réactifs utilisés pour les différentes étapes, comme le 2-méthylanisole (pureté 99%), le chlorure d'éthanoyle (98%), le chlorure d'aluminium anhydre sous forme de poudre (98,5%) ou le permanganate de potassium, ont été utilisés sans aucune purification. En revanche, le chlorure de thionyle (99,5%) est purifié par distillation sous atmosphère inerte et à pression ambiante avant son utilisation. Seule la fraction distillée à 76°C est récupérée.

Les solvants employés au cours des différentes étapes sont de qualité analytique.

La liste des produits utilisés est présentée en tableau 1 ci- après

| Produits | N° C.A.S.* |
|---|---|
| 1,2-dichloroéthane | 107-06-2 |
| 2-méthylanisole | 578-58-5 |
| Acide chlorhydrique | 7647-01-0 |
| Chlorure d'aluminium | 7446-70-0 |
| Chlorure d'éthanoyle | 75-36-5 |
| Chlorure de thionyle | 7719-09-7 |
| Diéthyl éther anhydre | 60-29-7 |
| Hydroxyde de sodium | 1310-73-2 |
| Méthanol | 67-56-1 |
| Permanganate de potassium | 7722-64-7 |
| XAD-4 | 37380-42-0 |

Chemical Abstract Service Registry Number Index - Système d'indexation international des produits chimiques

Les caractéristiques du support solide avec le polymère modifié sont:
- surface spécifique (800 m²/g)
- diamètre moyen des billes : 350 nm
- volume moyen des pores : 0,9 ml.g⁻¹
- diamètre moyen des pores : 4 nm.

Exemple 2 : Colonne d'extraction avec un support solide selon l'exemple 1.

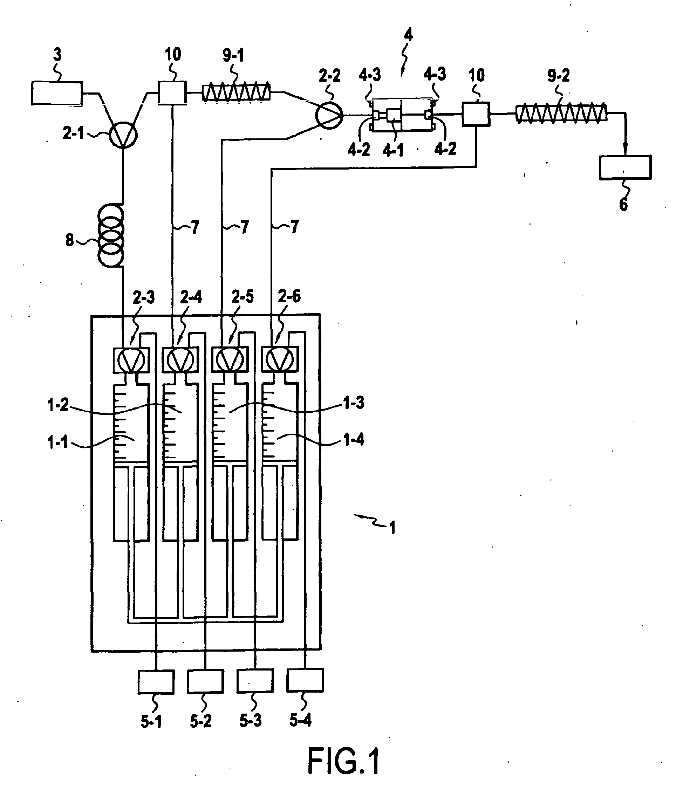

Sur la figure 1 on a représenté un module de 1 micro colonnes 4 permettant de contenir un support solide de la résine modifié selon l'invention. Ce module permet la circulation de l'échantillon à analyser à travers celle-ci.

Cette micro colonne 4 est démontable et permet ainsi le changement du support solide, par exemple pour un remplacement en fin de vie du produit.

Ce module est fabriqué par usinage et assemblage carrée par des écrous 4-3 de serrage formant un bloc parallélépipédique de 40mm de long et 25x25mm de large dans sa section. Chaque micro colonne est réalisée dans un bloc de ployméthacrylate de méthyle (plexiglas, perspex...) comprenant une cavité cylindrique centrale 4-1 délimitée à chaque extrémité par une pastille en composé fritté 4-2 de préférence en fibre de verre d'une porosité d'environ 20 µm. La cavité centrale permet de contenir environ 40 milligrammes de particules de support solide. L'étanchéité du système est assurée par des joints plats en polytérafluoroethylène (téflon, PTFE...) entre pastille et cavité cylindrique. Chaque extrémité de cette cavité est continuée par un canal d'un diamètre intérieur d'environ 0,8 mm et terminée par un filetage 1/4" 28 filets permettant de raccorder des tubulures de diamètre extérieur 1,6 mm à l'aide d'embouts en polypropylène, tefzel® ou autre matière, munis de joints de serrage en téflon, de type Omnifit® par exemple.

La masse de résine (40 mg) contenue dans la micro colonne permet de retenir jusqu'à 560 microgrammes de fer et 180 µg d'aluminium (soit respectivement 1.10⁻⁵ et 6,67.10⁻⁶ moles), ce qui correspond à 5 ml d'un échantillon contenant 112 mg.L⁻¹ de fer ou 36 mg.L⁻¹ d'aluminium.

La capacité de rétention du support solide avec le polymère modifié est : 4,1 à 4,7 mg Al³⁺.g⁻¹ ou 14 à 14,2 mg Fe³⁺.g⁻¹.

Exemple 3 : Dispositif et procédé d'extraction et analyse avec une colonne selon l'exemple 2 :

La présente invention a pour objet la quantification en ligne de quantification est menée suivant les différentes étapes suivantes :
(a)percolation de l'échantillon à travers une résine modifiée et rétention de(s) l'analyte(s) d'intérêt
(b)élution par un acide approprié
(c) mélange de l'éluât avec un réactif spécifiquement formulé
(d)détection spectrophotométrique ou spectrofluorimétrique du mélange

Le dispositif représenté figure 1 comporte 4 modules généraux :
a- un ensemble 1 de burettes ou seringues automatiques 1-1 à 1-4 et d'électrovannes de commutation 2-1 à 2-6 pilotables pour l'aspiration A et la poussée B des échantillons 3 et de l'eau 5-1 et des réactifs 5-2 à 5-4 contenus dans les burettes 1-1 à 1-4
b- une micro colonne 4 contenant une résine modifiée pour l'extraction de l'aluminium et du fer
c- un ensemble de réactifs 5-2 à 5-4 et eau 5-1 permettant l'ajustement du pH de l'échantillon 3, l'élution de l'aluminium et du fer de la micro colonne et la complexation des analytes élués
d- un détecteur spectrophotométrique 6 ou spectrofluorimétrique pour la quantification de l'aluminium et du fer après mesure de l'intensité du signal (absorbance, transmitance ou intensité de fluorescence) liée à la présence du complexe formé avec l'aluminium et le fer.

Les modules a à d sont reliés par des tubulures 7 de préférence en téflon, d'un diamètre interne de 0,8 mm et des raccords en T 10. Les tubulures peuvent être enroulées ou disposées en serpentin pour former des boucles d'attente 8 ou des boucles de mélanges 9-1 et 9-2 (ou réacteur onduleux).

La percolation de l'échantillon 3 à travers la micro colonne 4 est assurée de préférence par une seringue automatique ou une pompe péristaltique (non représentée).

Pour les seringues, Il peut être utilisé des seringues automatiques de marque Crison®, Hamilton® ou autre.

Comme il sera vu plus loin, pour assurer une bonne rétention de l'aluminium et du fer sur la résine modifiée, il est nécessaire de placer l'échantillon dans des conditions de pH optimales. Le pH est ajusté à l'aide d'acide nitrique 5-2 de préférence, mais il peut être utilisé un autre acide tel que l'acide chlorhydrique. De l'acide nitrique à une concentration 0,11 mol.L⁻¹ est utilisé pour ajuster le pH de l'échantillon à une valeur d'environ 2 pour la rétention du fer, et de l'acide nitrique à 0,035 mol.L⁻¹ est utilisé pour ajuster le pH de l'échantillon à une valeur d'environ 2,5 pour la rétention de l'aluminium (Al³⁺). Dans ces conditions, les volumes d'acide nitrique 5-2 et d'échantillon 3 doivent être compris dans un rapport 1 :5.

Pour assurer une bonne rétention de l'aluminium et du fer sur la colonne de résine modifiée, la vitesse de percolation de l'échantillon 3 préalablement acidifié doit être réglée entre 1,5 et 6 ml.min⁻¹, avec une préférence pour 3 ml.min⁻¹ pour l'extraction du fer et de 2 ml.min⁻¹ pour l'extraction de l'aluminium. Le volume d'échantillon percolé à travers la colonne de résine est variable suivant les gammes de mesure envisagées mais doit être inférieur ou égal à 5 mL. Le volume d'échantillon3 peut par exemple être fixé à 2 ml pour une gamme de mesure de l'aluminium de 10 à 400 µg.L⁻¹ et à 5 ml pour une gamme de mesure du fer identique.

L'élution de l'aluminium et du fer retenus sur la résine est effectuée après passage de l'échantillon par percolation d'acide, avec utilisation par ordre de préférence d'acide chlorhydrique 5-3 et d'acide nitrique 5-2, à des concentrations comprises entre 0,1 et 1 mol.l⁻¹. La concentration d'acide chlorhydrique 5-3 doit être de préférence fixée à 0,1 mol.L⁻¹ pour l'élution de l'aluminium et à 0,35 mol.L⁻¹ pour l'élution du fer. Le volume d'acide 5-3 percolé dépend de la gamme de mesure envisagée mais doit être compris dans une fourchette allant de 1 à 5 ml. Le volume d'acide peut par exemple être fixé à 2 ml pour l'élution de l'aluminium et du fer et leur quantification dans une gamme de 10 à 400 µg.L⁻¹. La vitesse de percolation de l'acide pour l'élution doit être réglée entre 1 et 8 ml.min⁻¹, avec une préférence de 6 ml.min⁻¹ pour l'élution de l'aluminium et de 4 ml.min⁻¹ pour l'élution du fer.

La percolation de l'acide 5-3 à travers la résine modifiée permet ainsi de régénérer cette dernière qui est alors prête pour une nouvelle extraction.

La percolation de l'acide 5-3 à travers la résine est assurée de préférence par une autre seringue automatique 1-3, de même type que cité précédemment. Les tubulures 7 utilisées doivent être résistantes aux acides, de préférence de type téflon.

Le choix de la percolation de l'échantillon 3 ou de l'acide 5-3 pour l'élution est réalisé en tête de micro colonne 4 à l'aide d'une électrovanne pilotable de commutation à deux voies 2-2. Cette électrovanne 2-2 peut être par exemple de marque Crison®, Valco® ou autre.

En aval de cette élution, l'analyte élué contenu dans l'acide est mélangé à un réactif ou composition de détection 5-4 spécifiquement formulé pour la complexation de l'aluminium ou du fer. Le réactif 5-4 est élaboré différemment suivant qu'il s'agit de quantifier le fer ou l'aluminium, mais les produits chimiques qui le composent sont identiques :
- un ligand, le chromazurol S, pour la formation d'un complexe d'aluminium ou du fer. Un autre ligand spécifique de la complexation de l'aluminium et du fer peut être utilisé du moment qu'il forme des complexes détectables par toute méthode spectrale dans le domaine UV ou visible, comme la 8-hydroxyquinoline par exemple.
- un agent masquant, pour éventuellement complexer les éléments interférents
- un tampon, afin de stabiliser le pH du mélange réactionnel à une valeur stable
- un agent surfactant ou détergent, afin de renforcer l'absorbance ou l'intensité de fluorescence des complexes formés.

Le tableau 2 ci-dessous présente la composition des réactifs de détection 5-4 utilisés pour la quantification de l'aluminium et du fer.

**Tableau 2**

| Composés | Réactif Aluminium | Réactif Fer |
|---|---|---|
| Ligand | Chromazurol S | Chromazurol S |
| Surfactant | Bromure de Cétyltriméthylammonium | Bromure de Cétyltriméthylammonium |
| Agents masquants | - 1,10-Orthophénanthroline - Chlorhydrate d'hydroxylamine | - |
| Tampon | Acétate de sodium | Formate de sodium |

Le tableau 3 ci-dessous présente les références des produits utilisés pour la constitution des réactifs.

**Tableau 3**

| Produits | N° C.A.S. |
|---|---|
| Bromure de Cétyltriméthylammonium | 57-09-0 |
| Chlorhydrate d'hydroxylamine | 5470-11-1 |
| Chromazurol S | 1667-99-8 |
| Formate de sodium | 141-53-7 |
| 1,10-Orthophénanthroline | 5144-89-8 |

Le chromazurol S est un ligand de la famille des sulfophtaléines, qui a la propriété de complexer de nombreux métaux par la formation de liaisons entre ces métaux et ses atomes d'oxygène. Les métaux complexés par le chromazurol S sont essentiellement des cations durs ou intermédiaires comme l'aluminium, le calcium, le cuivre ou encore le fer. Le tableau 4 suivant recense de façon non exhaustive les conditions de pH optimales pour la complexation de différents métaux :

**Tableau 4**

| | | | | | | |
|---|---|---|---|---|---|---|
| Métal | Al³⁺ | Ca²⁺ | Cu²⁺ | Fe³⁺ | Mg²⁺ | Ni²⁺ |
| pH | 4-5 | 11 | 6 | 2-3 | 10-11 | 8-11 |

A la lecture du tableau 4 ci-dessus, on peut donc conclure qu'il est possible de complexer séparément quelques éléments métalliques en modifiant le pH de la réaction. Ainsi, l'aluminium et le fer devront être complexés préférentiellement à pH faiblement acide.

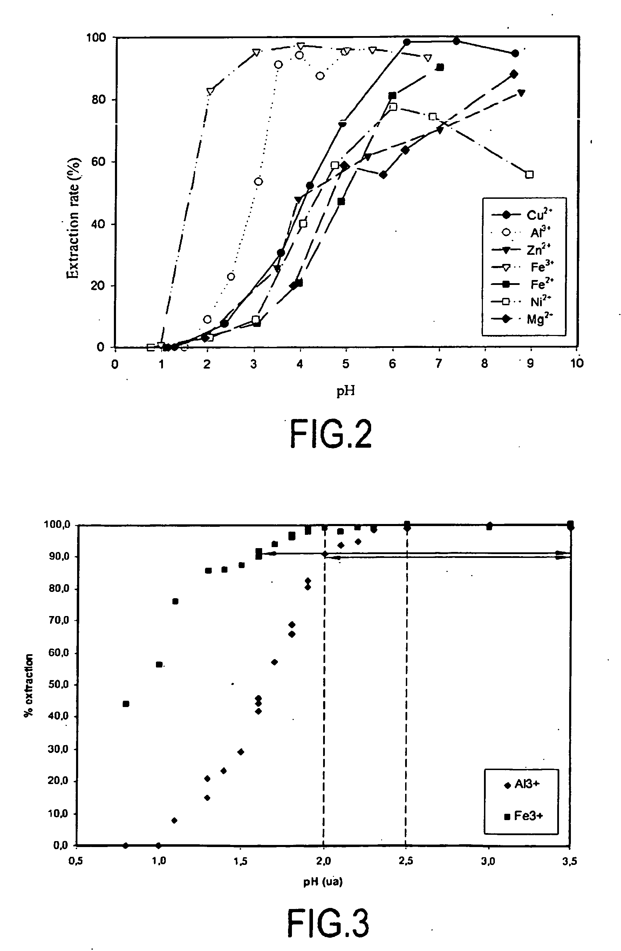

La complexation de Fe³⁺ par le chromazurol S à pH acide (pH compris entre 2 et 3) est quasi-sélective. Cette sélectivité est renforcée par les propriétés d'extraction du support solide modifié à pH 2 (Cf figures 2 et 3). Le pH acide du milieu réactionnel est maintenu par un tampon composé de formate de sodium.

Cependant, même en ajustant le pH optimal pour un métal donné, il n'est pas certain d'obtenir une complexation totalement sélective de l'aluminium le cas échéant. En effet, la complexation de l'aluminium peut être soumise à l'interférence du fer (totalement extrait par le support solide modifié à pH 2,5) et du cuivre (partiellement extrait par le support solide modifié à pH 2,5). Il est donc nécessaire de renforcer la sélectivité du chromazurol S pour l'aluminium en ajoutant à la composition du réactif un agent masquant, présentant une affinité plus grande avec les métaux interférents que le chromazurol S, et ne modifiant pas les caractéristiques spectrales du complexe chromazurol 5-Aluminium. L'agent masquant utilisé préférentiellement dans cette invention est la 1,10-orthophénanthroline, permettant de complexer le fer(II) et le cuivre en lieu et place du chromazurol S. Le chlorhydrate d'hydroxylamine est ajouté pour assurer la réduction du fer(III) en fer(II) et donc la complexation de la totalité du fer par la 1,10-orthophénanthroline. Le pH du mélange réactionnel pour la complexation de l'aluminium est maintenu à l'aide d'un tampon constitué d'acétate de sodium (pH 5).

Le dernier constituant des réactifs pour la détection de l'aluminium et du fer est un surfactant : le bromure de cétyltriméthylammonium. Ce composé entraîne au niveau de la détection spectrophotométrique un effet bathochrome (déplacement du pic d'absorption vers les longueurs d'onde plus élevées), permettant ainsi de mieux distinguer l'absorption des complexes métalliques formés par le chromazurol S vis-à-vis du chromazurol S libre. D'autre part, l'effet bathochrome est accompagné d'un effet hyperchrome (augmentation de l'absorptivité des complexes métalliques formés) qui permet d'augmenter la sensibilité de la méthode de détection.

Les réactifs pour la détection de l'aluminium et du fer après élution du support solide modifié sont donc composés comme suit :
- composition de détection pour dosage de l'Aluminium :
   o Chromazurol S : 5,25.10⁻⁴ mol/L
   o Bromure de Cétyltriméthylammonium : 3,5.10⁻³ mol/L
   o 1,10-orthophénanthroline : 1,4.10⁻³ mol/L
   o chlorhydrate d'hydroxylamine : 3,5.10⁻³ mol/L
   o acétate de sodium : 1,478 mol/L
- composition de détection pour dosage du fer :
   o Chromazurol S : 5,25.10⁻⁴ mol/L
   o Bromure de Cétyltriméthylammonium: 1,75.10⁻³ mol/L
   o Formate de sodium : 1,367 mol/L

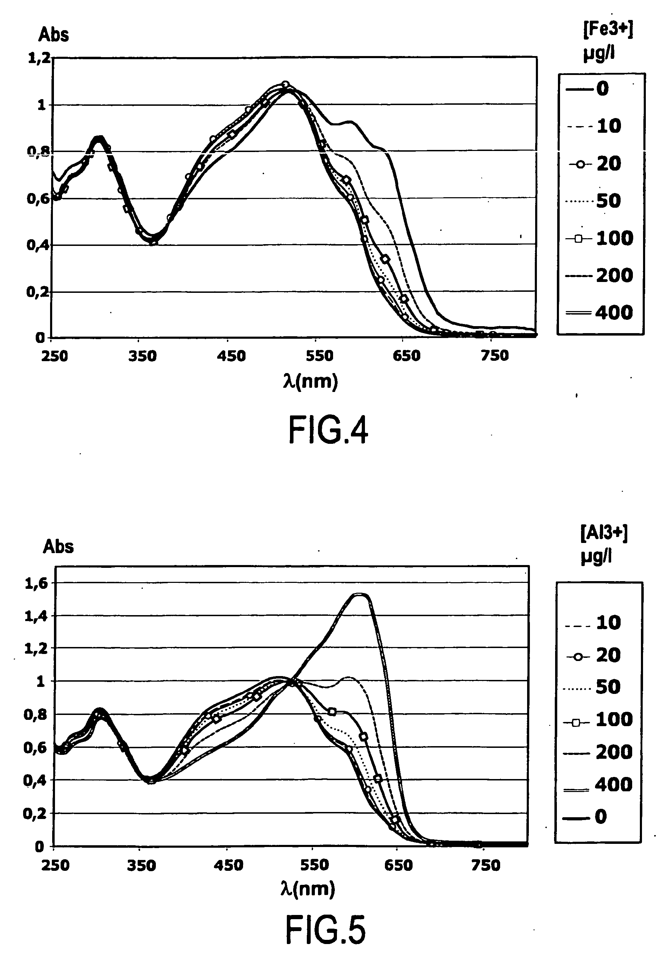

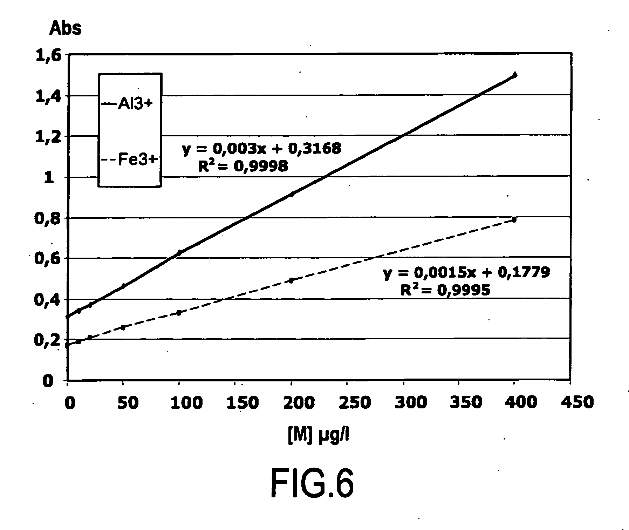

Le dispositif est étalonné à l'aide de solutions standards de cation Al³⁺ et de Fe³⁺. Les figures 4 et 5 présentent les spectres d'absorption UV-visible obtenus par l'injection de différentes concentrations en aluminium (Al³⁺) ou en fer (Fe³⁺) dans un flux de réactif composé comme ci-dessus. Les droites d'étalonnage pour l'aluminium (Al³⁺) et le fer(Fe³⁺) présentées en figure 6 ont été établies d'après ces spectres, en mesurant l'absorbance à 610 nm et 630 nm, respectivement pour l'aluminium et le fer.

La sélectivité globale du dispositif (extraction quasi-sélective sur support solide et détection par les réactifs de complexation préférentielle de l'aluminium et du fer) est résumée dans le tableau 5 suivant présentant les concentrations limites (en µg/l) en cations interférents n'entraînant pas une erreur supérieure à 5% sur la quantification de l'aluminium ou du fer :

**Tableau 5**

| Cations Interférents | Aluminium | Fer |
|---|---|---|
| Al³⁺ | - | 250 |
| Cu²⁺ | 2300 | 3500 |
| Fe²⁺ | 1900 | 400 |
| Fe³⁺ | 1200 | - |
| Mn²⁺ | 4900 | 900 |
| Ni²⁺ | 5000 | 8000 |
| Zn²⁺ | 7400 | 12000 |

Les résultats du tableau 5 ont été obtenus par essais sur des solutions binaires Al³⁺/cation interférent ou Fe³⁺/cation interférent.

Les concentrations limites présentées ici sont bien au-delà des concentrations limites en ces cations préconisées dans les eaux destinées à la consommation humaine.

Dans les conditions préférentielles décrites précédemment, ces réactifs permettent la quantification de l'aluminium et du fer après extraction quasi-sélective sur support solide modifié suivant les caractéristiques analytiques suivantes :
- Gamme de mesure : 0 - 400 µg/l d'aluminium ou de fer
- Limites de détection : 9,2 et 10,8 µg/l respectivement pour l'aluminium et le fer
- Sensibilités : 0,20 et 0,15 µg/l respectivement pour l'aluminium et le fer
- Précisions : 0,55% et 1,05% respectivement pour l'aluminium et le fer.
- Détecteur : Ocean Optics® PC2000 ou tout autre détecteur optique permettant de mesurer une absorbance, transmittance ou fluorescence.

Dans le dispositif, la poussée du réactif 5-4 est assurée de préférence par une autre seringue automatique 1-4, de même type que celle citée précédemment. Les tubulures utilisées doivent être de préférence de type téflon. Le mélange réactionnel entre le réactif 5-4 et l'éluât contenant l'aluminium ou le fer est homogénéisé dans un réacteur onduleux 9-2 (ou boucle de mélange) constitué d'une grande longueur de tubulure, de préférence en téflon d'un diamètre interne de 0,8 mm, disposée en spirales ou de préférence en serpentins. La longueur de la tubulure constituant cette boucle de mélange doit être supérieur à 1 m. En amont de ce réacteur, l'arrivée des deux voies du réactif et de l'éluat est assurée par une pièce raccord 10 en plexiglas de préférence, percée de canalisation d'un diamètre intérieur de 0,8 mm formant un 'Y' ou un 'T', terminée par un filetage 1/4" 28 filets permettant de raccorder des tubulures de diamètre extérieur 1,6 mm à l'aide d'embouts présentés précédemment.

Une dernière seringue automatique 1-1 ou une pompe péristaltique alimentée par de l'eau déminéralisée 5-1 permet de pousser le mélange réactionnel formé vers le détecteur 6 qui peut être de type spectrophotométrique ou fluorimétrique. Le détecteur 6 permet de mesurer l'absorbance, la transmitance ou l'intensité de fluorescence à un temps donné, dépendant de la vitesse de poussée, et à une longueur d'onde donnée (déterminée à partir des courbes d'absorption telles que figures 4 et 5). L'intensité du signal mesuré est ensuite reportée sur une courbe d'étalonnage telle que celle de la figure 6 et permet de calculer la concentration en aluminium ou en fer présente dans l'échantillon.

L'ensemble du dispositif décrit ci-dessus doit être piloté par ordinateur ou par un dispositif électronique à microprocesseur. Les commandes des burettes ou seringues automatiques 1-1 à 1-4, des électrovannes 2-1 à 2-6 et du détecteur 6 doivent respecter un ordre chronologique. Les enchaînements de commandes pour la quantification de l'aluminium et du fer dans une gamme 10-400 µg.L⁻¹ sont présentés en tableaux 5 et 6 respectivement. Le dispositif peut être piloté par un logiciel commercial de type Labview de National Instrument ou de préférence par un logiciel spécifiquement programmé pour le dispositif tel que XMLab. Ce logiciel est conçu de telle façon que l'opérateur puisse programmer ses propres méthodes et enchaînements de commandes, par exemple pour changer la gamme de concentration désirée, ou encore pour adapter le dispositif au dosage d'autres éléments métalliques, en remplaçant la résine modifiée, le réactif ou bien encore les conditions de préparation de l'échantillon. La programmation de l'enchaînement des commandes des différents modules ne nécessite aucune connaissance de programmation informatique.

L'enchaînement des commandes des tableaux 5 et 6 est le suivant :
- Commande 1 : nettoyage du dispositif
- Commande 4 : aspiration de l'échantillon dans la boucle 8
- Commandes 5 à 7 : prétraitement de l'échantillon par l'acide nitrique 5-2 dans le réacteur 9-1 puis percolation à travers le support dans la cavité 4-1
- Commande 8 : recharge des seringues 1-1 à 1-4
- Commande 9 : élution de la colonne 4 par l'acide chlorhydrique 5-3 et mélange avec réactif 5-4 dans le réacteur 9-2
- Commande 10 : recharge des seringues 1-1 à 1-4
- Commande 13 : poussée vers le détecteur 6 et mesure optique du signal

Tous les modules et éléments du dispositif décrits ci-dessus sont constitués de matériaux inertes tels que le Téflon, et ne sont donc pas susceptibles de relarguer des élément s traces métalliques pouvant interférer dans la quantification ultérieure.

**Tableau 5**

| Numéro de commande | Valve 2-1 | Valve 2-2 | Valve 2-3 | Valve 2-4 | Valve 2-5 | Valve 2-6 | Mode | Pas moteur | Vitesse en pas moteur/seconde |
|---|---|---|---|---|---|---|---|---|---|
| 1 | ON | OFF | OFF | OFF | ON | ON | DISPENSE | 16000 | 320 |
| | | | | | | | | | |
| 2 | ETALONNAGE DU DETECTEUR | | | | | | | | |
| | | | | | | | | | |
| 3 | DEBUT DE LA BOUCLE DE REPETITION = N CYCLE | | | | | | | | |
| 4 | ON | OFF | OFF | OFF | OFF | ON | ASPIRE | X | 800 (Vmax) |
| 5 | ON | ON | OFF | OFF | ON | ON | DISPENSE | X | 88 |
| 6 | OFF | OFF | OFF | OFF | ON | ON | ASPIRE | 16000 | 800 (Vmax) |
| 7 | ON | OFF | OFF | OFF | ON | ON | DISPENSE | 12800 | 106 |
| 8 | OFF | OFF | OFF | OFF | ON | OFF | ASPIRE | 12800 | 800 (Vmax) |
| 9 | OFF | OFF | ON | ON | ON | OFF | DISPENSE | 12800 | 426 |
| 10 | OFF | OFF | OFF | OFF | ON | ON | ASPIRE | 12800 | 800 (Vmax) |
| 11 | TEMPS ATTENTE = 300 SECONDES | | | | | | | | |
| 12 | DEBUT DE LA MESURE OPTIQUE | | | | | | | | |
| 13 | ON | OFF | OFF | OFF | ON | ON | DISPENSE | 16000 | 106 |
| 14 | FIN DE LA MESURE OPTIQUE | | | | | | | | |
| 15 | FIN DE LA BOUCLE DE REPETITION | | | | | | | | |

**Tableau 6**

| **Numéro de commande** | **Valve 2-1** | **Valve 2-2** | **Valve 2-3** | **Valve 2-4** | **Valve 2-5** | **Valve 2-6** | **Mode** | **Pas moteur** | **Vitesse en pas moteur/seconde** |
|---|---|---|---|---|---|---|---|---|---|
| 1 | ON | OFF | OFF | OFF | ON | ON | DISPENSE | 16000 | 320 |
| 2 | ETALONNAGE DU DETECTEUR | | | | | | | | |
| 3 | DEBUT DE LA BOUCLE DE REPETITION = N CYCLE | | | | | | | | |
| 4 | ON | OFF | OFF | OFF | OFF | ON | ASPIRE | X | 800 (Vmax) |
| 5 | ON | ON | OFF | OFF | ON | ON | DISPENSE | X | 176 |
| 6 | OFF | OFF | OFF | OFF | ON | ON | ASPIRE | 16000 | 800 (Vmax) |
| 7 | ON | OFF | OFF | OFF | ON | ON | DISPENSE | 12800 | 213 |
| 8 | OFF | OFF | OFF | OFF | ON | OFF | ASPIRE | 12800 | 800 (Vmax) |
| 9 | OFF | OFF | ON | ON | ON | OFF | DISPENSE | 12800 | 640 |
| 10 | OFF | OFF | OFF | OFF | ON | ON | ASPIRE | 12800 | 800 (Vmax) |
| 11 | TEMPS ATTENTE = 300 SECONDES | | | | | | | | |
| 12 | DEBUT DE LA MESURE OPTIQUE | | | | | | | | |
| 13 | ON | OFF | OFF | OFF | ON | ON | DISPENSE | 16000 | 106 |
| 14 | FIN DE LA MESURE OPTIQUE | | | | | | | | |
| 15 | FIN DE LA BOUCLE DE REPETITION | | | | | | | | |

La figure 2 présente les propriétés de la résine de poly(styrène-divinylbenzène) selon l'invention quant à la rétention en flux de différents éléments métalliques en milieu aqueux en fonction du pH de la solution. A pH acide (pH<4), la résine ainsi fonctionnalisée est quasi-sélective de l'aluminium et du fer.

De façon plus précise, la rétention en flux de l'aluminium est optimale à un pH compris entre 2 et 3,5 avec une préférence pour un pH égal à 2,5 et la rétention en flux du fer est maximale à un pH compris entre 1,6 et 3,5 avec un optimum pour un pH égal à 2 (figure 3).

Les domaines d'extraction ainsi définis pour l'aluminium et le fer correspondent pour la valeur basse à une extraction quantitative d'au moins 90% de l'élément considéré et pour la valeur haute à une extraction maximale de 30% des éléments autres qu'aluminium et fer.

## Revendications

1. Procédé de dosage de cations Al³⁺ et/ou Fe³⁺ dans un milieu aqueux **caractérisé en ce qu'**on réalise une analyse en flux comprenant les étapes successives suivantes dans lesquelles :
1) on prélève un échantillon de dit milieu aqueux de volume déterminé, et
2) on ajuste le pH de l'échantillon à une valeur de pH de 2 à 2,5, et
3) on fait passer par percolation la totalité de l'échantillon ainsi prétraité à travers une colonne contenant des particules solides, de préférence sous forme de billes, de résine comprenant un polymère du poly(styrène-divinylbenzène) réticulé (1), ledit polymère au moins en surface des dites particules, comprenant un radical d'acide salicylique (3) greffé sur des cycles benzéniques par l'intermédiaire d'un pont cétone (2) de formule générale schématique I suivante : 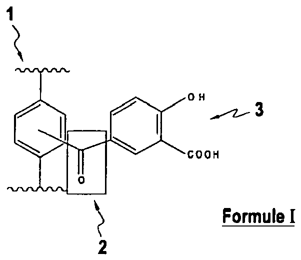 Dans laquelle
- (1) représente le polymère réticulé,
- (2) représente le pont cétone,
- (3) représente le radical d'acide salicylique, et
4) on réalise une élution à travers la colonne avec une solution pH de 0.1 à 1, et
5) on mélange l'éluât avec une composition de détection comprenant un agent complexant de détection complexant les cations Al³⁺ et Fe³⁺ sous forme de complexe détectable par spectrophotométrie d'absorption qui est le Chromazurol S dans des conditions de pH de 2 à 5 permettant la complexation préférentielle de l'un des cations Al³⁺ ou Fe³⁺ que l'on veut doser par rapport à l'autre cation, à savoir pH de 2 à 3 pour le dosage des cations Fe (III) et pH de 4 à 5 pour le dosage des cations AI(III), et
6) on dose les cations Al³⁺ ou Fe³⁺ en quantifiant les complexes d'Al³⁺ ou respectivement de Fe³⁺ formés par mesure de spectrophotométrie en présence d'un agent tensioactif cationique augmentant l'absorptivité du complexe métallique formé.

2. Procédé de dosage selon la revendication 1 **caractérisé en ce que** à l'étape 2), pour réaliser le dosage de cations Al³⁺, on ajuste le pH à une valeur de 2,5, et, pour réaliser le dosage de cations Fe³⁺, on ajuste le pH à une valeur de 2.

3. Procédé selon l'une des revendications 1 ou 2 **caractérisé en ce qu'**à l'étape 5) on mélange ledit agent de détection complexant les cations, avec des réactifs transformants le Fe³⁺ en Fe²⁺, tel que le chlorhydrate d'hydroxylamine et un agent complexant le Fe²⁺ tel que la 1,10-orthophénanthroline, et à l'étape 6) on dose les cations Al³⁺.

4. Procédé selon l'une des revendications 1 à 3 **caractérisé en ce qu'**à l'étape 2), on met en oeuvre de l'acide nitrique.

5. Procédé selon l'une des revendications 1 à 4 **caractérisé en ce qu'**à l'étape 3), on envoie un volume donné d'eau distillé dans la colonne après le dit volume d'échantillon prétraité pour pousser le dit échantillon dans la colonne et s'assurer que la totalité de l'échantillon a bien traversé la colonne.

6. Procédé selon l'une des revendications 1 à 5 **caractérisé en ce qu'**on dose des concentrations de 0 à 400 µg/l de cations Al³⁺ et /ou Fe³⁺, et on met en oeuvre des quantités de support solide correspondant à au moins 5 mg/(ml d'échantillon), de préférence au moins 8mg/(ml d'échantillon), plus particulièrement de 5 à 10 mg/(ml d'échantillon).

7. Procédé selon l'une des revendications 1 à 6 **caractérisé en ce qu'** à l'étape 4), on met en oeuvre une solution à pH de 0,1 à 0,35 pour le dosage de Fe²⁺ et pH de 0,5 à 1 pour le dosage de Al³⁺, de préférence une solution d'acide chlorhydrique.

8. Procédé selon l'une des revendications 1 à 7 **caractérisé en ce qu'**à l'étape 4), on met en oeuvre un volume de solution d'élution d'acide inférieure au volume de l'échantillon initial pour concentrer la solution en analyte par rapport audit échantillon initialement prélevé.

9. Procédé selon l'une des revendications 1 à 8 **caractérisé en ce qu'**on met en oeuvre des volumes d'échantillon percolé de 2 à 5ml, la vitesse de percolation de l'échantillon à l'étape 3) est de 1,5 à 6 ml/min., de préférence de 2 à 3 ml/min et à l'étape 4),le volume d'acide percolé est de 1/5 à 1/1 et la vitesse de percolation de l'acide est de 1 à 8 ml/min. de préférence de 4 à 6 ml/min.

10. Procédé selon l'une des revendications 1 à 9 **caractérisé en ce qu'**on dose les cations Al³⁺,et à l'étape 5) on met en oeuvre le dit chromazurol dans une solution tampon à pH 5.

11. Procédé selon l'une des revendications 1 à 9 **caractérisé en ce qu'**on dose les cations Fe³⁺, à l'étape 5) on met en oeuvre le dit chromazurol dans une solution tampon à pH 3.

12. Procédé selon l'une des revendications 1 à 11, **caractérisé en ce qu'**à l'étape 5) on met en oeuvre l'agent complexant de détection comprenant du chromazurol S en mélange avec un agent tensioactif cationique à une concentration supérieure à la concentration micellaire critique.

13. Procédé selon l'une des revendications 1 à 12, **caractérisé en ce qu'**on met en oeuvre un dispositif d'analyse in situ par injection en flux comprenant :
a- un ensemble (1) de burettes ou seringues automatiques (1-1 à 1-4) et d'électrovannes de commutation (2-1 à 2-6) pilotables pour l'aspiration et la poussée des échantillons (3) et des réactifs (5-2 à5-4) et de l'eau (5-1) contenus dans les dites burettes ou seringues (1-1 à 1-4),
b- au moins une micro colonne (4) contenant un dit support solide,
c- un ensemble de réactifs (5-2 à 5-4) et eau (5-1) permettant respectivement l'ajustement du pH de l'échantillon (3), l'élution de l'aluminium et du fer de la micro colonne et la complexation des analytes élués, et
d- un appareil (6) spectrophotométrique permettant la quantification de l'aluminium et du fer par mesure de l'intensité du signal (absorbance) liée à la présence du complexe formé avec l'aluminium et le fer, et
e- des tubulures (7) de préférence en téflon, reliant les modules a- à d-, les dites tubulures pouvant être enroulées ou disposées en serpentin pour former des boucles d'attente (8) ou des boucles de mélanges (9-1,9-2).

## Claims

1. A method to assay Al³⁺ and/or Fe³⁺ cations in an aqueous medium, **characterized in that** flow analysis is performed comprising the following successive steps in which:
1) a sample of determined volume is taken from said aqueous medium, and
2) the pH of the sample is adjusted to a pH value of 2 to 2.5, and
3) the entirety of the sample thus pre-treated is passed by percolation through a column containing solid particles, preferably in the form of beads, of a resin which comprises a polymer of cross-linked poly(styrenedivinylbenzene) (1), said polymer at least on the surface of said particles comprising a salicylic acid radical (3) grafted on benzene rings via a ketone bridge (2) having the following schematic general formula I: 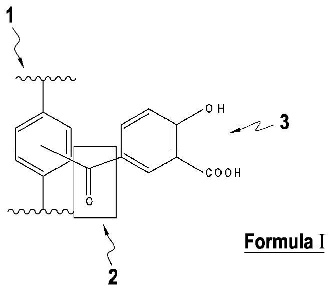 Where:
- (1) is the cross-linked polymer,
- (2) is the ketone bridge,
- (3) is the salicylic acid radical; and
4) a solution of pH 0.1 to 1 is eluted through the column, and
5) the eluate is mixed with a detection composition comprising a detection complexing agent which complexes the cations Al³⁺ and Fe³⁺ to a complex form detectable by absorption spectrophotometry i.e. Chromazurol S under pH conditions of 2 to 5 allowing the preferred complexing of one of the cations Al³⁺ or Fe³⁺ that it is desired to assay against the other cation, namely a pH of 2 to 3 for the assay of Fe (III) cations and a pH of 4 to 5 for the assay of Al(III) cations, and
6) the cations Al³⁺ or Fe³⁺ are assayed by quantifying the formed complexes of Al³⁺ or Fe³⁺ respectively by spectrophotometric measurement in the presence of a cationic surfactant agent increasing the absorptivity of the formed metal complex.

2. The assay method according to claim 1 **characterized in that** at step 2), to conduct the assay of Al³⁺ cations, the pH is adjusted to a value of 2.5, and to conduct the assay of Fe³⁺ cations the pH is adjusted to a value of 2.

3. The method according to one of claims 1 or 2, **characterized in that** at step 5) said cation-complexing detection agent is mixed with reagents converting Fe³⁺ to Fe²⁺, such as hydroxylamine hydrochloride and an agent which complexes Fe²⁺ such as 1,10-orthophenanthroline, and at step 6) the Al³⁺ cations are assayed.

4. The method according to one of claims 1 to 3, **characterized in that** at step 2) nitric acid is used.

5. The method according to one of claims 1 to 4, **characterized in that** at step 3) a given volume of distilled water is passed through the column after said volume of pre-treated sample to propel said sample through the column and ensure that the entirety of the sample passes through the column.

6. The method according to one of claims 1 to 5, **characterized in that** concentrations of 0 to 400 µg /l of Al³⁺ and/or Fe³⁺ cations are assayed, and quantities of solid substrate are used which correspond at least to 5 mg/(ml of sample), preferably at least 8 mg/(ml of sample), further preferably 5 to 10 mg/(ml of sample).

7. The method according to one of claims 1 to 6, **characterized in that** at step 4) a solution of pH 0.1 to 0.35 is used for the assay of Fe²⁺ and with a pH of 0.5 to 1 for the assay of Al³⁺, preferably a hydrochloric acid solution.

8. The method according to one of claims 1 to 7, **characterized in that** at step 4) a volume of acid elution solution is used that is smaller than the volume of the initial sample to concentrate the analyte solution in relation to said sample initially taken.

9. The method according to one of claims 1 to 8, **characterized in that** volumes of percolated sample of 2 to 5 ml are used, the rate of percolation of the sample at step 3) is 1.5 to 6 ml/min, preferably 2 to 3 ml/min, and at step 4) the volume of percolated acid is 1/5 to 1/1 and the percolation rate of the acid is from 1 to 8 ml/min, preferably 4 to 6 ml/min.

10. The method according to one of claims 1 to 9 **characterized in that** the Al³⁺ cations are assayed, and at step 5) said chromazurol is used in a buffer solution of pH 5.

11. The method according to one of claims 1 to 9, **characterized in that** the Fe³⁺ cations are assayed, at step 5) said chromazurol is used in a buffer solution of pH 3.

12. The method according to one of claims 1 to 11, **characterized in that** at step 5) the detection complexing agent comprising chromazurol S is used in a mixture with a cationic surfactant agent at a concentration higher than the critical micelle concentration.

13. The method according to one of claims 1 to 12, **characterized in that** an *in situ* flow injection analysis device is used comprising:
a- an assembly (1) of burettes or automatic syringes (1-1 to 1-4) and switching solenoid valves (2-1 to 2-6) which can be driven to aspirate and propel the samples (3) and reagents (5-2 to 5-4) and the water (5-1) contained in said burettes or syringes (1-1 to 1-4);
b- at least one micro-column (4) containing a said solid substrate;
c- a set of reagents (5-2 to 5-4) and water (5-1) respectively allowing the adjustment of the pH of the sample (3), the eluting of the aluminium and iron in the micro-column and the complexing of the eluted analytes, and
d- spectrophotometry apparatus (6) allowing the quantification of the aluminium and iron by measuring the intensity of the signal (absorbance) related to the presence of the complex formed with the aluminium and iron, and
e- tubing (7) preferably in Teflon connecting the modules a- to d-, said tubing possibly being wound or arranged in a coil to form waiting loops (8) or mixing loops (9-1, 9-2).

## Patentansprüche

1. Verfahren zur Bestimmung von Al³⁺- und/oder Fe³⁺-Kationen in einem wäßrigen Medium, **dadurch gekennzeichnet, daß** eine Durchflußanalyse durchgeführt wird, die die folgenden aufeinanderfolgenden Schritte umfaßt, bei denen:
1) eine Probe des wäßrigen Mediums mit bestimmtem Volumen entnommen wird, und
2) der pH der Probe auf einen pH-Wert von 2 bis 2,5 eingestellt wird, und
3) man die gesamte so vorbehandelte Probe durch eine Säule perkolieren läßt, die feste Harzpartikel, vorzugsweise in Form von Kugeln, enthält, umfassend ein vernetztes Poly(styrol-divinylbenzol)-Polymer (1), wobei das Polymer wenigstens an der Oberfläche der Partikel ein Salicylsäure-Radikal (3) umfaßt, das mittels einer Ketonbrücke (2) auf Benzolringe gepfropft ist, mit folgender allgemeiner schematischer Formel I: 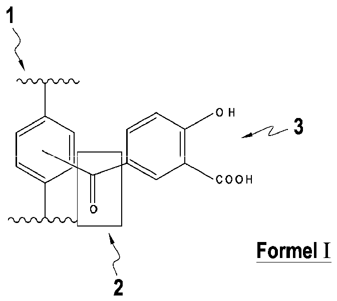 worin
- (1) das vernetzte Polymer darstellt,
- (2) die Ketonbrücke darstellt,
- (3) das Salicylsäure-Radikal darstellt und
4) eine Elution durch die Säule mit einer Lösung mit einem pH von 0,1 bis 1 durchgeführt wird, und
5) das Eluat mit einer Detektionszusammensetzung gemischt wird, die einen Detektionskomplexbildner umfaßt, der die Al³⁺- und Fe³⁺-Kationen in Form eines Komplexes, welcher mittels Absorptionsspektrophotometrie detektierbar ist, komplexiert, dieser ist Chromazurol S unter pH-Bedingungen von 2 bis 5, die die bevorzugte Komplexierung von einem der Al³⁺- oder Fe³⁺-Kationen ermöglichen, das in Bezug auf das andere Kation bestimmt werden soll, nämlich pH von 2 bis 3 für die Bestimmung der Fe(III)-Kationen und pH von 4 bis 5 für die Bestimmung der Al(III)-Kationen, und
6) die Al³⁺- oder Fe³⁺-Kationen dadurch bestimmt werden, daß der gebildete Al³⁺-Komplex bzw. der gebildete Fe³⁺-Komplex durch Spektrophotometriemessung in Gegenwart eines kationischen Tensids, das das Absorptionsvermögen des gebildeten Metallkomplexes erhöht, quantifiziert werden.

2. Bestimmungsverfahren nach Anspruch 1, **dadurch gekennzeichnet, daß** bei Schritt 2) der pH auf einen Wert von 2,5 eingestellt wird, um die Bestimmung von Al³⁺-Kationen vorzunehmen, und der pH auf einen Wert von 2 eingestellt wird, um die Bestimmung von Fe³⁺-Kationen vorzunehmen.

3. Verfahren nach einem der Ansprüche 1 oder 2, **dadurch gekennzeichnet, daß** bei Schritt 5) das die Kationen komplexierende Detektionsmittel mit Reagenzien, die Fe³⁺ in Fe²⁺ umwandeln, wie Hydroxylaminchlorhydrat, und einem Fe²⁺ komplexierenden Mittel, wie 1,10-Orthophenanthrolin, gemischt wird und bei Schritt 6) die Al³⁺-Kationen bestimmt werden.

4. Verfahren nach einem der Ansprüche 1 bis 3, **dadurch gekennzeichnet, daß** bei Schritt 2) Salpetersäure verwendet wird.

5. Verfahren nach einem der Ansprüche 1 bis 4, **dadurch gekennzeichnet, daß** bei Schritt 3) nach dem Volumen an vorbehandelter Probe ein vorgegebenes Volumen an destilliertem Wasser in die Säule geschickt wird, um die Probe in der Säule vorwärts zu treiben und um sicherzugehen, daß auch die gesamte Probe die Säule durchlaufen hat.

6. Verfahren nach einem der Ansprüche 1 bis 5, **dadurch gekennzeichnet, daß** Konzentrationen von 0 bis 400 µg/l Al³⁺- und/oder Fe³⁺-Kationen bestimmt werden und Mengen an festem Träger verwendet werden, die wenigstens 5 mg/(ml Probe), vorzugsweise wenigstens 8 mg/(ml Probe), insbesondere 5 bis 10 mg/(ml Probe) entsprechen.

7. Verfahren nach einem der Ansprüche 1 bis 6, **dadurch gekennzeichnet, daß** bei Schritt 4) eine Lösung mit einem pH-Wert von 0,1 bis 0,35 für die Fe²⁺-Bestimmung und einem pH-Wert von 0,5 bis 1 für die Al³⁺-Bestimmung, vorzugsweise eine Salzsäurelösung verwendet wird.

8. Verfahren nach einem der Ansprüche 1 bis 7, **dadurch gekennzeichnet, daß** bei Schritt 4) ein Volumen an Säureelutionslösung verwendet wird, das geringer als das Volumen der Ausgangsprobe ist, um die Analyt-Lösung gegenüber der anfangs entnommenen Probe zu konzentrieren.

9. Verfahren nach einem der Ansprüche 1 bis 8, **dadurch gekennzeichnet, daß** Volumina an perkolierter Probe von 2 bis 5 ml verwendet werden, die Perkolationsgeschwindigkeit der Probe bei Schritt 3) zwischen 1,5 und 6 ml/Min., vorzugsweise zwischen 2 und 3 ml/Min. liegt und bei Schritt 4) das perkolierte Säurevolumen 1/5 bis 1/1 beträgt und die Perkolationsgeschwindigkeit der Säure 1 bis 8 ml/Min, vorzugsweise 4 bis 6 ml/Min. beträgt.

10. Verfahren nach einem der Ansprüche 1 bis 9, **dadurch gekennzeichnet, daß** die Al³⁺-Kationen bestimmt werden und bei Schritt 5) Chromazurol in einer Pufferlösung mit einem pH-Wert von 5 verwendet wird.

11. Verfahren nach einem der Ansprüche 1 bis 9, **dadurch gekennzeichnet, daß** die Fe³⁺-Kationen bestimmt werden, bei Schritt 5) Chromazurol in einer Pufferlösung mit einem pH-Wert von 3 verwendet wird.

12. Verfahren nach einem der Ansprüche 1 bis 11, **dadurch gekennzeichnet, daß** bei Schritt 5) der Chromazurol S enthaltende Detektionskomplexbildner in Mischung mit einem kationischen Tensid in einer Konzentration, die über der kritischen Mizellenkonzentration liegt, verwendet wird.

13. Verfahren nach einem der Ansprüche 1 bis 12, **dadurch gekennzeichnet, daß** eine Vorrichtung zur In-situ-Analyse mittels Fließinjektion eingesetzt wird, die umfaßt:
a- eine Anordnung (1) von automatischen Büretten oder Spritzen (1-1 bis 1-4) und von steuerbaren Schaltelektroventilen (2-1 bis 2-6) zum Ansaugen und Vorwärtstreiben der Proben (3) sowie der Reagenzien (5-2 bis 5-4) und des Wassers (5-1), die in den Büretten oder Spritzen (1-1 bis 1-4) enthalten sind,
b- wenigstens eine Mikrosäule (4), die einen festen Träger enthält,
c- eine Menge von Reagenzien (5-2 bis 5-4) und Wasser (5-1), die die Einstellung des pH-Wertes der Probe (3), die Elution des Aluminiums und des Eisens der Mikrosäule bzw. die Komplexierung der eluierten Analyten ermöglichen, und
d- ein spektrophotometrisches Gerät (6), das die Quantifizierung des Aluminiums und des Eisens durch Messen der Stärke des Signals (Absorbanz), die mit dem Vorliegen des mit dem Aluminium und dem Eisen gebildeten Komplexes verbunden ist, ermöglicht, und
e- Stutzen (7), vorzugsweise aus Teflon, die die Module a- bis d- verbinden, wobei die Stutzen gewickelt oder schlangenförmig angeordnet werden können, um Warteschleifen (8) oder Mischschleifen (9-1, 9-2) zu bilden.
